(19) Europäisches Patentamt
European Patent Office
Office européen des brevets

(11) Numéro de publication: **0 359 676 B1**

(12) **FASCICULE DE BREVET EUROPEEN**

(45) Date de publication de fascicule du brevet: **03.11.93**

(51) Int. Cl.$^{5}$: **C08J 3/03**, C08L 83/04

(21) Numéro de dépôt: **89420317.3**

(22) Date de dépôt: **29.08.89**

# (54) Dispersion aqueuse à base de résine silicone pouvant réticuler en un élastomère par élimination de l'eau.

(30) Priorité: **31.08.88 FR 8811609**

(43) Date de publication de la demande:
**21.03.90 Bulletin 90/12**

(45) Mention de la délivrance du brevet:
**03.11.93 Bulletin 93/44**

(84) Etats contractants désignés:
**AT BE CH DE ES FR GB GR IT LI LU NL SE**

(56) Documents cités:
**EP-A- 0 143 877**
**EP-A- 0 169 098**
**EP-A- 0 202 494**
**EP-A- 0 266 729**
**EP-A- 0 304 719**
**GB-A- 2 059 979**
**US-A- 3 070 560**

(73) Titulaire: **RHONE-POULENC CHIMIE**
**25, quai Paul Doumer**
**F-92408 Courbevoie Cédex(FR)**

(72) Inventeur: **Feder, Michel**
**35, rue du Séminaire**
**Zillisheim**
**F-68720 Illfurth(FR)**
Inventeur: **Ulrich, Jean**
**Rue de Villeneuve**
**Ternay**
**F-69360 Saint Symphorien D'Ozon(FR)**

(74) Mandataire: **Fabre, Madeleine-France et al**
**RHONE-POULENC CHIMIE**
**Direction des Brevets**
**Secteur Spécialités Chimiques**
**25, quai Paul-Doumer**
**F-92408 Courbevoie Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.6/3.3.1)

## Description

La présente invention concerne une dispersion aqueuse à base de résine silicone pouvant réticuler en un élastomère par élimination de l'eau.

Le brevet US-A-2 891 920 décrit un procédé de polymérisation en émulsion de polydiorganosiloxane en utilisant un catalyseur acide ou basique en présence d'agents tensio-actifs anioniques, cationiques ou non-ioniques. Ce brevet enseigne que les émulsions obtenues sont stables au stockage et sont utiles, après addition de charges, pour faire des peintures donnant un revêtement continu par élimination de l'eau.

Le brevet US-A-3 294 725 décrit en particulier l'utilisation d'acide dodécylbenzène-sulfonique pour polymériser en émulsion des polydiorganosiloxanes. Ce brevet enseigne que pour obtenir des émulsions stables, il est souhaitable de règler le pH de ces émulsions à une valeur de 7 environ. Ce brevet enseigne que l'on peut obtenir à partir de ces émulsions neutralisées, auxquelles on a ajouté de la silice colloïdale et un polyalcoxysilane, un revêtement élastomère.

L'enseignement du brevet US-A-3 360 491 est similaire à celui de US-A-3 294 725, sauf que l'acide dodécylbenzène sulfonique est remplacé par l'hydrogénolaurylsulfate.

Le brevet US-A-3 355 406 décrit entre autre un latex de silicone comportant :

- une suspension aqueuse colloïdale d'un $\alpha,\omega$-(dihydroxy)polydiorganosiloxane,
- une charge comportant nécessairement un silsesquioxane sous forme d'une suspension colloïdale,
- un catalyseur choisi parmi des acides minéraux, des bases fortes, des diacylates de dialkylétain et des péroxydes organiques ou inorganiques.

Le brevet US-A-3 697 469 décrit un procédé particulier de polymérisation en émulsion de polydiorganosiloxanes et indique la possibilité d'ajouter à cette émulsion de la silice colloïdale et un sel d'étain en vue d'obtenir un revêtement élastomère par évaporation d'eau.

Le brevet français FR-A-2 110 358 décrit une émulsion silicone à pH compris entre 6,5 et 9, réticulant en un élastomère conducteur de l'électricté après évaporation de l'eau par incorporation de noir de carbone. L'émulsion, comportant en outre un sel d'étain et un polyalcoxysilane, n'est pas stable au stockage et doit être conservée en deux emballages distincts (émulsion bicomposante).

Les brevets américains US-A-4 221 688, US-A-4 244 849 et français FR-A-2 463 163 décrivent des émulsions silicone stables au stockage et comportant :

- une émulsion d'un polymère $\alpha,\omega$-(dihydroxy)polydiorganosiloxane stabilisée anioniquement,
- une charge siliceuse,
- un sel d'étain,
- éventuellement une charge non renforçante.

La charge siliceuse peut être une silice colloïdale (US-A-4 221 688), du silicate de soude (US-A-4 244 849), ou une silice amorphe en poudre (FR-A-2 463 163).

Par rapport aux émulsions aqueuses connues de l'art antérieur, ces trois brevets enseignent d'une part que pour obtenir une émulsion monocomposante stable au stockage il faut conserver l'émulsion à un pH alcalin supérieur à 8,5 ou 9, de préférence supérieur à 10, et, d'autre part, incorporer à l'émulsion un sel d'étain pour raccourcir à quelques jours l'étape de maturation de l'émulsion nécessaire à l'obtention d'une dispersion capable de réticuler.

Les émulsions silicones chargées connues, conservées à pH acide ou neutre, présentent au moins l'un des inconvénients suivants :

- elles ne sont pas stables au stockage quand elles sont conditionnées en un seul emballage (composition monocomposante),
- elles présentent un temps de durcissement trop long en un élastomère,
- elles ne sont pas thixotropes.
- elles n'adhèrent que très faiblement sur les supports usuels.

Des émulsions ou dispersions aqueuses à base de résine silicone et réticulables en un élastomère par élimination de l'eau ont déjà été décrites.

Ainsi le brevet US-A-3 355 406 déjà cité enseigne un latex de silicone constitué d'un $\alpha$, $\omega$(dihydroxy)-polyorganosiloxane,de préférence préparé par polymerisation en émulsion et d'une résine silsesquioxane constituée de motifs $RSi0_{1,5}$ (R reste hydrocarboné). Le latex peut comporter en outre un catalyseur métallique de durcissement et un alkyltrialcoxysilane.

Le document US-A-3 075 560 enseigne l'utilisation de siloxane hydroxylé et d'un composé de bore pour réduire l'adhésion d'une composition à base de diorganopolysiloxane et de silice.

Selon le document EP-A-143 877, US-A-4 554 187, la résine silicone associé à l'$\alpha$, $\omega$ - (dihydroxy)-polydiorganosiloxane présente des fonctions alcoxy ou acyloxy libérant des alcools ou des acides par réaction avec les fonctions hydroxy.

Le document EP-A-202 494 décrit l'emploi de silanes à fonctions époxy comme agents de couplage d'une émulsion à base de dihydroxypolyorganosiloxane et de silice colloïdale ou de silicate alcalin ayant subi une étape de maturation à pH 9-12.

Dans la demande de brevet EP-A-266 729 l'agent de réticulation associé à l'$\alpha$, $\omega$ -(dihydroxy)-polydiorganosiloxane et au catalyseur de durcissemet, est un siliconate.

A ce siliconate peut être associée une résine silicone comportant jusqu'à 10 % en poids de groupe hydroxyle.

Le document EP-A-304 719 constitue l'état de la technique selon l'article 54(3) de la CBE et concerne une dispersion de silicone qui se différencie de l'invention par une résine silicone de poids moléculaire élevé, insoluble dans le toluène.

Dans ce qui suit, sauf mentions contraires, les pourcentages et parties sont en poids.

Un but de la présente invention est de proposer une dispersion (émulsion) aqueuse de silicone, présentant une valeur de pH acide ou basique, pouvant réticuler en un élastomère par élimination de l'eau, à température ambiante qui ne présente pas les inconvénients des émulsions connues, ou sous forme très atténuée.

Un autre but de la présente invention est de proposer une dispersion aqueuse de silicone du type ci-dessus qui soit stable au stockage, qui réticule correctement et suffisament rapidement en un élastomère par élimination de l'eau à température ambiante, l'élastomère formé conservant ses propriétés mécaniques lors de vieillissement ; un autre but de la présente invention est de proposer une dispersion aqueuse de silicone du type ci-dessus dont l'étape de maturation puisse être effectuée à une température peu élevée (20-60 °C) et pendant une durée inférieure à 48 heures.

Un autre but de la présente invention est de proposer une dispersion aqueuse de silicone du type ci-dessus conduisant à un élastomère présentant en outre une résistance à la flamme améliorée.

Un autre but de présente l'invention est de proposer une dispersion aqueuse de silicone du type ci-dessus conduisant à un élastomère présentant une adhérence satisfaisante sur divers supports en particulier sur verre, béton et métaux (acier, aluminium).

Ces buts et d'autres sont atteints par la présente invention qui concerne en effet une dispersion aqueuse de silicone, réticulant en un élastomère par élimination de l'eau dans les conditions ambiantes, comportant :

(A) - 100 parties d'une émulsion du type huile dans eau d'un $\alpha$, $\omega$(dihydroxy)polydiorganosioxane stabilisée par au moins un agent tensio-actif choisi parmi les agents tensio-actifs anioniques et non-ioniques,

(B) - 1 à 100 parties en poids d'une résine silicone hydroxylée,

(C) - 0 à 250 parties en poids d'une charge minérale non siliceuse,

(D) - 0,01 à 3 parties en poids d'un composé catalytique métallique de durcissement et excluant la présence d'un siliconate répondant à la formule

$$R'\text{-}Si(\overline{O}\overset{+}{M})_m(OH)_{3-m}$$

et/ou ses produits de condensation formés par enlèvement d'eau,

formule dans laquelle

R' représente des radicaux hydrocarbonés, identiques ou différents, qui contiennent de 1 à 18 atomes de carbone et qui portent éventuellement des atomes d'halogènes, des radicaux amino, des radicaux éthers, des radicaux esters, des radicaux époxy, des radicaux mercapto, des radicaux cyano ou des radicaux de (poly)glycols, ces derniers étant constitués de motifs oxy-éthylènes et/ou oxypropylènes,

m désigne un nombre entier ou fractionnaire compris entre 0,1 et 3, et

M représente un cation de métal alcalin, un radical ammonium ou un radicai phosphonium.

Ladite dispersion ayant une teneur en extrait sec d'au moins 40 % et étant caractérisée en ce que ladite résine silicone hydroxylée (B) est soluble à au moins 70 % en poids dans le toluène et présente, par molécule, au moins deux motifs différents choisis parmi ceux de formules : $R_3SiO_{0,5}$, $R_2SiO$, $RSiO_{1,5}$, et $SiO_2$, les radicaux R, identiques ou différents , étant choisis parmi les radicaux vinyle, phényle, trifluoro-3,3,3 propyle et les radicaux alkyle linéaires ou ramifiés ayant de 1 à 6 atomes de carbone inclus, ladite résine ayant une teneur pondérale en groupe hydroxyle comprise entre 0,1 et 10 %.

Les $\alpha$, $\omega$-(dihydroxy)polydiorganosiloxane doivent avoir une viscosité d'au moins 100 mPa.s à 25 °C, de préférence d'au moins 50 000 mPa.s.

C'est en effet pour des viscosités supérieures à 50 000 mPa.s que l'on obtient un élastomère présentant un ensemble de propriétés mécaniques convenables, en particulier au niveau de la dureté Shore

A et de l'allongement.

En outre plus la viscosité est élevée et plus les propriétés mécaniques se conservent lors du vieillissement de l'élastomère.

Les viscosités préférées pour la présente invention sont comprises entre 50 000 et 1 500 000 mPa.s à 25 °C.

Les radicaux organiques des $\alpha,\omega$-(dihydroxy)polydiorganopolysiloxanes sont des radicaux hydrocarbonés monovalents contenant jusqu'à 6 atomes de carbone, éventuellement substitué par des groupes cyano ou fluoro. Les substituants généralement utilisés du fait de leur disponibilité dans les produits industriels sont les radicaux méthyle, éthyle, propyle, phényle, vinyle et 3,3,3-trifluoropropyle. En général au moins 80 % en nombre de ces radicaux sont des radicaux méthyle.

Dans le cadre de la présente invention on préfère plus spécialement utiliser les $\alpha,\omega$-(dihydroxy)-polydiorganosiloxanes préparés par le procédé de polymérisation anionique décrit dans les brevets américains précités : US-A-2891 920 et surtout US-A-3 294 725 (cités comme référence). Le polymère obtenu est stabilisé anioniquement par un agent tensio-actif qui, conformément à l'enseignement de US-A-3 294 725 est de préférence le sel d'un métal alcalin d'un acide hydrocarboné aromatique sulfonique, l'acide libre jouant également le rôle de catalyseur de polymérisation.

Le catalyseur et l'agent tensio-actif préférés sont l'acide dodécylbenzènesulfonique et ses sels de métaux alcalins, en particulier son sel de sodium. On peut ajouter éventuellement d'autres agents tensio-actifs anioniques ou non-ioniques. Toutefois cet ajout n'est pas nécessaire car, conformément à l'enseignement de US-A-3 294 725, la quantité d'agent tensio-actif anionique résultant de la neutralisation de l'acide sulfonique est suffisante pour stabiliser l'émulsion de polymère. Cette quantité est généralement inférieure à 3 %, de préférence 1,5 % du poids de l'émulsion.

Ce procédé de polymérisation en émulsion est particulièrement intéressant car il permet d'obtenir directement l'émulsion (A). Par ailleurs ce procédé permet de pouvoir obtenir sans difficulté des émulsions (A) de $\alpha,\omega$-(dihydroxy)polydiorganosiloxane de très haute viscosité.

Pour préparer l'émulsion (A) on peut également partir d'$\alpha,\omega$-(dihydroxy)polydiorgosiloxane déjà polymérisé, puis le mettre en émulsion aqueuse en stabilisant les émulsions par un agent tensio-actif anionique et/ou non-ionique suivant un procédé bien connu de l'homme de métier et décrit en détail dans la littérature (voir par exemple les brevets FR-A-2 064 563, FR-A-2 094 322, FR-A-2 114 230 et EP-A-169 098).

Selon ce procédé, on mélange par simple agitation les polymères $\alpha,\omega$-(dihydroxy)polydiorganosiloxane avec l'agent tensio-actif anionique ou non-ionique, ce dernier pouvant être en solution aqueuse, à ajouter ensuite si nécessaire de l'eau et à transformer l'ensemble en une émulsion fine et homogène par passage dans un broyeur classique à colloïdes.

Par la suite le broyat obtenu est dilué par une quantité d'eau appropriée et on obtient ainsi une émulsion (A) stabilisée par un agent tensio-actif anionique ou non-ionique stable au stockage.

La quantité d'agent tensio-actif anionique et non-ionique utilisable est celle utilisée couramment pour la mise en oeuvre du procédé de mise en émulsion, en particulier ceux décrits dans les brevets précités et dans le brevet US-A-2 891 920.

Dans le cadre de la présente invention les agents tensio-actifs anioniques préférés sont le sel d'un métal alcalin d'un acide hydrocarboné aromatique sulfonique et les agents tensio-actifs non-ioniques préférés sont les alkylphénols polyoxyéthylénés. Ces agents tensio-actifs non-ioniques sont bien entendu les mêmes que ceux que l'on peut ajouter éventuellement aux émulsions (A) obtenues par polymérisation en émulsion comme indiqué plus haut.

L'émulsion (A) préparée par polymérisation en émulsion ou par mise en émulsion du polymère silicone se présente sous la forme d'une émulsion huile dans l'eau et a, de préférence, une teneur en extrait sec supérieure à 45 % en poids.

Pour 100 parties d'émulsion (A), on incorpore de 1 à 100, de préférence de 2 à 20 parties, calculées en extraits secs, d'une résine silicone hydroxylée (B).

La résine silicone hydroxylée (B) possède une teneur pondérale en groupe hydroxyle comprise entre 0,1 et 10 %, de préférence entre 1 et 6 %.

Cette résine (B) présente, par molécule, au moins deux motifs différents choisis parmi ceux de formules : $R_3SiO_{0,5}$ (motif M), $R_2SiO$ (motif D), $RSiO_{1,5}$ (motif T) et $SiO_2$ (motif Q).

Comme exemples de radicaux R alkyle on peut citer les radicaux méthyle, éthyle, isopropyle, tertiobutyle et n-hexyle.

Ces résines silicones sont des polymères organopolysiloxanes ramifiés bien connus dont les procédés de préparation sont décrits dans de très nombreux brevets.

Comme exemples de résines utilisables on peut citer les résines MQ, les résines MDQ, les résines TD et les résines MDT.

On peut utiliser les résines qui sont solides ou liquides à température ambiante. Ces résines peuvent être incorporées dans les émulsions aqueuses telles quelles, en solution dans un solvant organique ou une huile silicone, ou bien sous forme d'émulsions aqueuses.

Des émulsions aqueuses de résines silicones utilisables sont par exemple décrites dans les brevets US-A-4 028 339, US-A-4 052 331, US-A-4 056 492, US-A-4 525 502 et US-A-4 717 599, cités comme référence.

Un autre constituant de la dispersion selon l'invention est l'addition de 0 à 250, de préférence de 5 à 200 parties d'une charge minérale non siliceuse semi-renforçante ou de bourrage (C).

Les charges (C) ont une granulométrie généralement comprise entre 1 et 300 $\mu$m et une surface BET inférieure à 50 $m^2$/g.

Des exemples de charges (C) utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte.

Ces charges (C) sont introduites dans l'émulsion (A) sous forme de poudre sèche par exemple par simple mélange.

Selon une variante de l'invention, on a découvert que si la charge (C) n'est sensiblement constituée que d'une charge choisie parmi l'alumine hydratée, la vermiculite expansée, la vermiculite non expansée selon unt teneur de 5 à 250, de préférence de 50 à 200 parties pour 100 parties d'émulsion (A) on obtient un élastomère ayant une résistance à la flamme particulièrement élevée qui ne peut pas être obtenue avec les autres catégories de charge (C) précitées, en particulier avec l'oxyde d'aluminium ou alumine non hydratée. On peut également incorporer des fibres céramiques ou d'aramide selon l'enseignement de EP-A-212 827.

Les composés catalytiques métalliques de durcissement (D) sont essentiellement les sels d'acides carboxyliques et les halogénures de métaux choisis parmi le plomb, le zinc, le zirconium, le titane, le fer, l'étain, le baryum, le calcium et le manganèse.

Le constituant (D) est de préférence un composé catalytique à l'étain, généralement un sel d'organoétain, introduit de préférence sous forme d'une émulsion aqueuse. Les sels d'organoétain utilisables sont décrits, en particulier dans l'ouvrage de NOLL, Chemistry and Technology of Silicones Academic Press (1968), page 337.

On peut également utiliser comme composé catalytique à l'étain le produit de réaction d'un sel d'étain, en particulier d'un di-carboxylate d'étain sur du polysilicate d'éthyle, comme décrit dans le brevet US-A-3 862 919.

On peut également utiliser le produit de réaction d'un silicate d'alkyle ou d'un alkyltrialcoxysilane sur le diacétate de dibutylétain comme décrit dans le brevet belge BE-A-842 305.

Les sels d'étain préférés sont les bischelates d'étain (EP-A-147 323 et EP-A-235 049), les dicarboxylates de diorganoétain et en particulier les diversatates de dibutyl- ou de dioctylétain (brevet britannique (GB-A-1 289 900), le diacétate de dibutyl- ou de dioctylétain, le dilaurate de dibutyl- ou de dioctylétain. On utilise de 0,01 à 3, de préférence de 0,05 à 2 parties de sel d'organoétain pour 100 parties de (A).

Selon une variante, on peut incorporer en outre, pour 100 parties d'émulsion (A) un additif silicié (E) choisi parmi du silicate de soude (0,3 à 30 parties), et une charge siliceuse renforçante ou semi-renforçante (1 à 150 parties).

Ces charges siliceuses sont choisies parmi la silice colloïdale, les poudres de silice de combustion et de précipitation ou leur mélange. La silice de combustion est préférée. On peut toutefois utiliser également des charges siliceuses semi-renforçantes telles que des terres de diatomées, du quartz broyé.

Pour 100 parties d'émulsion (A), la somme des parties de (C) + (E) doit être inférieure à 300 parties.

Les poudres de silice de combustion et de précipitation sont bien connues, elles sont utilisées en particulier comme charges dans les compositions élastomère de silicone, vulcanisables à chaud en un caoutchouc de silicone. Ces poudres présentent une taille moyenne de particules généralement inférieures à 0,1 $\mu$m et une surface spécifique BET supérieure à 50 $m^2$/g, de préférence comprise entre 150 et 350 $m^2$/g.

L'incorporation dans l'émulsion (A) de cet additif silicié (E), par tout moyen convenable, en particulier par agitation, augmente considérablement la viscosité de l'émulsion (A) qui présente alors un caractère pâteux.

On a en effet trouvé, conformément à la présente invention que l'addition de cet additif silicié (E), est suffisante pour conférer à la dispersion un caractère "thixotrope" plus ou moins marqué. L'émulsion, extraite par exemple d'une cartouche de stockage, adhère sans s'écouler sur un substrat même vertical et durcit en élastomère par évaporation de l'eau à température ambiante. On peut également obtenir une émulsion non coulante en utilisant comme charge (C) du carbonate de calcium dont le diamètre particulaire

moyen est inférieur à 0,1 µm. Bien entendu un léger chauffage (à 40-80 °C environ) de la composition pour accélérer l'évaporation de l'eau n'est pas exclu du cadre de l'invention.

Aux dispersions conformes à la présente invention peuvent être ajoutés divers additifs permettant de modifier les propriétés des émulsions et des élastomères formés à partir des émulsions par élimination de l'eau. On peut incorporer des promoteurs d'adhérence (F), de préférence des organotrialcoxysilanes, comme par exemple le vinyltriméthoxysilane, les silicates d'alkyle tels que le silicate de méthyle ou le silicate d'éthyle ou leur produit d'hydrolyse partielle, c'est-à-dire les polysilicates d'alkyle tels que le polysilicate de méthyle et le polysilicate d'éthyle à une teneur de 0,1 à 20 parties d'agent d'adhérence pour 100 parties d'émulsions (A).

Les organotrialcoxysilanes et les silicates d'alkyle répondent de préférence à la formule générale :

$R'_aSi(OR)_{4-a}$

dans laquelle R est un radical alkyle ayant de 1 à 4 atomes, R′ est R ou vinyle et a est 1 ou 0.

Les dispersions selon l'invention ont une valeur de pH généralement comprise entre 4 et 13. Cette valeur dépend de la nature des ingrédients constitutifs de la dispersion, en particulier au niveau du tensio-actif et du catalyseur de l'émulsion (A) et au niveau de la charge (C).

Selon les applications visées il est possible de préparer des dispersions ayant un pH compris entre 4 et 7 par addition d'un acide minéral ou organique, de préférence un dérivé oxygéné du bore et des dispersions ayant un pH compris entre 7 et 13 par addition d'une base minérale ou organique, comme décrit plus en détails ci-dessous.

Comme autres exemples d'additifs on peut citer les antifongiques, les antimousses ainsi que les agents thixotropants comme la carboxyméthylcellulose, la gomme xanthane et l'alcool polyvinylique.

Les dispersions selon l'invention conviennent plus particulièrement dans l'industrie du bâtiment, à la réalisation de calfatage et de joint d'étanchéité.

Les dispersions selon l'invention peuvent être préparées de la façon suivante :

On part d'une émulsion (A) préparée soit par le procédé de polymérisation en émulsion et l'on dispose d'une émulsion stabilisée par un agent tensio-actif anionique et éventuellement non-ionique, soit par le procédé de mise en émulsion de l'a,s-(dihydroxy)polydiorganosiloxane et l'on dispose d'une émulsion stabilisée par un agent tensio-actif anionique et/ou non-ionique.

Pour préparer les dispersions selon l'invention il es recommandé d'ajouter à température ambiante à l'émulsion (A), en premier lieu le composé catalytique métallique de durcissement (D), de préférence sous forme d'une émulsion aqueuse, puis on règle le pH du mélange à une valeur supérieure à 7 et généralement inférieure à 13, au moyen d'une base minérale ou organique, de préférence au moyen d'un hydroxyde alcalin tel que soude et potasse ou à une valeur inférieure à 7 et supérieure à 4, par addition d'une quantité adaptée d'un dérivé oxygéné du bore choisi parmi l'oxyde borique, les acides boriques et les borates.

Comme base organique on peut utiliser les amines primaires telles que la diéthylamine. Cependant, selon un mode de réalisation préféré de l'invention, on règle le pH au moyen d'une quantité adaptée d'une base minérale introduite sous la forme d'une solution aqueuse choisie de préférence parmi les solutions d'hydroxydes alcalins et alcalino-terreux telles que la soude, la potasse, les solutions d'hydroxyde de calcium, l'hydroxyde de baryum et l'hydroxyde de magnésium. Toutefois les hydroxydes alcalino-terreux peuvent être introduits directement sous forme solide.

L'oxyde borique est également connu sous le nom d'anhydride borique. Comme acides boriques on peut citer l'acide orthoborique, l'acide métaborique et l'acide tétraborique. Comme borates sont utilisables les triorganoborates et les borates minéraux. Sont utilisables dans le cadre de la présente invention, le borate de triéthyle, le borate de triphényle, le borate de tribenzyle, le borate de tricyclohexyle, le borate de trisméthylsilyle, le borate de tri(t-butyle), le tétraborate de diammonium, le pentatorate d'ammonium, le tétraborate de sodium décahydraté (borax), le pentaborate de potaiium, le diborate de magnésium, le monoborate de calcium, le triborate de baryum et le métaborate de zinc. On peut également utiliser les produits d'hydrolyse partielle de ces borates.

Pour règler le pH final de la dispersion à une valeur comprise entre 4 et 7, il est généralement suffisant d'ajouter à la dispersion de 0,1 à 5 parties d'un dérivé oxygéné du bore pour 100 parties d'émulsion (A).

On ajoute les charges (C) et éventuellement (E), puis la résine (B) telle quelle, ou en solution dans un solvant organique ou dans une huile silicone, ou bien sous forme d'une émulsion aqueuse.

Comme huile silicone on peut utiliser un polydiméthylsiloxane bloqué triméthyle silyle, de viscosité à 25 °C comprise entre 100 et 5 000 mPa.s.

L'émulsion finale obtenue est homogénéisée puis dégazée et est ensuite conditionnée en emballage étanche à l'oxygène de l'air et à la vapeur d'eau.

Les constituants (A), (B), (C), (D) et éventuellement (E) et (F) sont mélangés en des quantités telles que l'émulsion finale présente une teneur en extrait sec supérieure à 40 %, de préférence supérieure à 60 %, mais généralement inférieure à 90 %.

Les dispersions selon l'invention peuvent être utilisées comme peinture réticulable en couche mince. Elles présentent alors, de préférence, un extrait sec compris entre 40 et 70 %.

Pour déterminer la teneur en extrait sec on place 2 g de dispersion dans une coupelle de pesage en aluminium et on la chauffe une heure à 150 °C dans un four à circulation d'air. Après refroidissement on pèse à nouveau la coupelle et on détermine le pourcentage de matière restante sur les 2 g initiaux qui représente la teneur en extrait sec.

Selon une variante préférée, la dispersion selon l'invention après sa préparation subit une étape de maturation, à température ambiante, ou comprise entre 20 et 90 °C, de quelques heures à quelques jours.

Cette étape et de maturation consiste simplement à chauffer éventuellement et à laisser reposer la dispersion à l'abri de l'oxygène de l'air avant sont utilisation.

Dans ce qui suit ou ce qui précède, sauf mentions contraires, les pourcentages et parties sont en poids.

- EXEMPLE 1 :

Préparation de l'émulsion (A) : elle est obtenue par polymérisation en émulsion d'huile a,s-(dihydroxy)-polydiméthylsiloxane de viscosité 100 mPa.s à 25 °C en présence d'acide dodécylbenzène sulfonique.

Quand la viscosité de l'huile atteint $10^6$ mPa.s à 25 °C, on arrête la polymérisation par neutralisation du catalyseur.

L'émulsion (A) obtenue a une teneur en extrait sec de 59 %.

A 100 parties d'émulsion (A) on ajoute sous agitation 1,5 partie d'émulsion aqueuse (D) à 37 % en poids de dilaurate de di-octyl étain. Puis on ajoute 1,2 partie de diéthylamine et 60 parties de charge (C) qui est du $CaCO_3$ de précipitation ayant une granulométrie moyenne de 0,07 µm.

A l'émulsion obtenue on ajoute telles quelles 8,3 parties d'une résine silicone hydroxylée (B) ayant 1 % en poids de groupes hydroxyle et constituée de 2 % en poids de motif $CH_3SiO_{1,5}$, 61,5 % ; en poids de motif $(CH_3)_2SiO$ et 36,5 % en poids de motif $(CH_3)_3SiO_{0,5}$.

La dispersion finale obtenue a un pH de 9,5.

Elle est homogénéisée pendant 30 minutes puis conditionnée sous un emballage étanche à l'oxygène de l'air et à la vapeur d'eau.

Après 4 jours de stockage, on étend à la râcle la dispersion suivant une pellicule (film) de 2 mm d'épaisseur qu'on laisse sécher pendant 7 jours à température ambiante.

Sur les pellicules séchées on mesure les propriétés mécaniques moyennes suivantes :

- la dureté Shore A (DSA) selon la norme ASTM-D-2240,
- la résistance à la rupture (R/R) selon la norme AFNOR-T 46 002 correspondant à la norme ASTM-D 412, en MPa,
- l'allongement à la rupture (A/R) en % selon la norme AFNOR-T 46 002,
- le module élastique (ME) à 100 % d'allongement selon la norme AFNOR-T 46 002, en MPa.

Les propriétés mécaniques obtenues sont rassemblées dans le tableau 1 ci-après.

- EXEMPLES 2 A 3 :

On répète exactement le mode opératoire de l'exemple 1 sauf que l'on remplace les 8,3 parties de résine (B) par :

- pour l'exemple 2 : 8,8 parties introduites telles quelles d'une résine ayant 2,2 % en poids de groupe hydroxyle constituée de 70 % en poids de motif $CH_3SiO_{1,5}$ et 30 % en poids de motif $(CH_3)_2SiO$. L'émulsion finale obtenue présente un pH de 8,5.
- pour l'exemple 3 : 4,1 parties introduites au moyen d'une solution à 70 % en poids dans le toluène d'une résine ayant 2,2 % en poids d'hydroxyle et constituée pde 73 % en poids de motif $C_6H_5SiO_{1,5}$ et 27 % en poids de motif $(CH_3)_2SiO$. L'émulsion finale obtenue présente un pH de 8,5.

Les propriétés mécaniques sont rassemblées dans le tableau 1 ci-après.

TABLEAU 1

| EXEMPLES | 1 | 2 | 3 |
|---|---|---|---|
| DSA | 13 | 16 | 10 |
| R/R (MPa) | 1,27 | 1,36 | 1,38 |
| A/R (%) | 1 021 | 1 020 | 1 306 |
| ME (MPa) | 0,17 | 0,20 | 0,12 |

- EXEMPLES 4 A 6 :

On répète exactement le mode opératoire de l'exemple 1, sauf que l'on remplace les 1,2 parties de diéthylamine par :

- pour l'exemple 4 : 4 parties d'une solution aqueuse à 20 % de potasse. L'émulsion finale présente un pH de 11.
- pour l'exemple 5 : 4 parties d'une solution à 20 % de potasse et 0,5 partie de polysilicate d'éthyle (éthyle silicate 40®). Le pH est de 11.
- pour l'exemple 6 : 4 parties d'une solution à 20 % de potasse et 1 partie de polysilicate d'éthyle. Le pH est de 11.

On dépose sur un support en verre ou en béton 1 cordon de 4 mm d'épaisseur. Après 10 jours on apprécie l'adhérence de l'élastomère formé en tirant manuellement sur le cordon.

Les adhésions ont été qualifiées de trois manières :

- bonne adhérence lorsque le cordon ne peut être décollé de son support (notée + +),
- adhérence moyenne lorsque le cordon est décollé difficilement et par petites surfaces (notée +),
- absence d'adhérence lorsque le cordon se décolle facilement (notée 0).

Les propriétés mécaniques et les appréciations de l'adhésion sont rassemblées dans le tableau 2 ci-après.

TABLEAU 2

| EXEMPLES | 4 | 5 | 6 |
|---|---|---|---|
| DSA | 15 | 23 | 27 |
| R/R (MPa) | 1,76 | 1,2 | 1,67 |
| A/R (%) | 986 | 730 | 704 |
| ME (MPa) | 0,19 | 0,29 | 0,45 |
| Adhérence verre | + | + + | + + |
| Adhérence béton | + | + | + |

- EXEMPLE 7 :

On répète le mode opératoire de l'exemple 1 sauf que l'on remplace :

- les 8,8 parties de résine MDT par 7 parties d'une résine MQ en solution dans le toluène ayant 2 % en poids d'hydroxyle et constituée de 50 % en poids de motif M et 50 % en poids de motif Q et,
- les 1,2 parties de diéthylamine par 4 parties d'une solution à 20 % de potasse.

Les propriétés mécaniques obtenues et l'appréciation de l'adhésion sont rassemblées dans le tableau 3 ci-après.

- EXEMPLE 8 :

On répète le mode opératoire de l'exemple 7 et on ajoute en outre 1 partie de polysilicate d'éthyle (éthylsilicate 40r).
Les propriétés mécaniques obtenues et l'appréciation de l'adhésion sont rassemblées dans le tableau 3 ci-après.

- EXEMPLE 9 :

On répète exactement le mode opératoire de l'exemple 2 sauf que :
a) - on remplace les 1,2 parties de diéthylamine par 0,59 partie d'acide borique,
b) - on remplace les 1,5 parties d'émulsion catalysante (D) par 1,5 partie d'émulsion catalysante à 37 % en poids d'un composé à l'étain qui est le produit de réaction d'une mole d'oxyde de dioctylétain sur une mole d'acide versatique r avec élimination de l'eau formée,
c) - sur la dispersion obtenue, on effectue une étape de maturation de 2 heures 30 minutes à 80 °C avant de conditionner la dispersion en emballage étanche.
Les propriétés mécaniques obtenues sont rassemblées dans le tableau 3 ci-après.

TABLEAU 3

| EXEMPLES | 7 | 8 | 9 |
|---|---|---|---|
| DSA | 7 | 13 | 16 |
| R/R | 0,9 | 0,36 | 1,04 |
| A/R | 1 377 | 680 | 1 010 |
| ME | 0,15 | 0,2 | 0,19 |
| Adhérence verre | + + | + + | - |
| Adhérence béton | + | + + | - |

**Revendications**

**1.** Dispersion aqueuse de silicone, réticulant en un élastomère par élimination de l'eau dans les conditions ambiantes, comportant, en poids :
(A) - 100 parties en poids d'une émulsion du type huile dans eau d'un α, ω (dihydroxy)polysiloxane stabilisée par au moins un agent tensio-actif choisi parmi les agents tensio-actifs anioniques et non-ioniques et leur mélanges,
(B) - 1à 100 parties en poids d'une résine silicone hydroxylée,
(C) - 0 à 250 parties en poids d'une charge minérale non siliceuse.
(D) - 0,01 à 3 parties en poids d'un composé métallique catalytique de durcissement, ladite dispersion ayant une teneur en extrait sec d'au moins 40 %, et étant caractérisée en ce que ladite résine silicone hydroxylée (B) est soluble à au moins 70 % en poids dans le toluène et présente, par molécule, au moins deux motifs différents choisis parmi ceux de formules $R_3Si0_{0,5}$, $R_2Si0$, $RSi0_{1,5}$ et $Si0_2$, les radicaux R, identiques ou différents, étant choisis parmi les radicaux vinyle, phényle, trifluoro-3,3,3, propyle et les radicaux alkyle linéaires ou ramifiés ayant de 1 à 6 atomes de carbone inclus, ladite résine ayant une teneur pondérale en groupe hydroxyle comprise entre 0,1 et 10%, et excluant la présence d'un siliconate répondant à la formule

$$R'\text{-}Si(\overline{O}\overset{+}{M})_m(OH)_{3-m}$$

et/ou ses produits de condensation formés par enlèvement d'eau, formule dans laquelle
R' représente des radicaux hydrocarbonés, identiques ou différents, qui contiennent de 1 à 18 atomes de carbone et qui portent éventuellement des atomes d'halogènes, des radicaux amino, des radicaux éthers, des radicaux esters, des radicaux époxy, des radicaux mercapto, des radicaux cyano ou des radicaux de (poly)glycols, ces derniers étant

constitués de motifs oxy-éthylènes et/ou oxypropylènes,
m désigne un nombre entier ou fractionnaire compris entre 0,1 et 3, et
M représente un cation de métal alcalin, un radical ammonium ou un radical phosphonium.

**2.** Dispersion aqueuse selon la revendication 1 caractérisée en ce que le composé métallique (D) est un sel d'organoétain (D) se trouvant sous forme d'une émulsion aqueuse.

**3.** Dispersion aqueuse de silicone selon l'une quelconque des revendications 1 à 2 ,caractérisée en ce que l'émulsion (A) a une teneur en extrait sec d'au moins 45 % en poids.

**4.** Dispersion aqueuse de silicone selon l'une quelconque des revendications précédentes, caractérisée en ce qu'elle comporte de 5 à 200 parties en poids de charqe (C) choisie parmi l'alumine hydratée, l'alumine, le carbonate de calcium, la vermiculite expansée, la vermiculite non expansée, le noir de carbone, l'oxyde de zinc, le dioxyde de titane, le mica, le talc, l'oxyde de fer, le sulfate de baryum et la chaux éteinte.

**5.** Dispersion aqueuse de silicone selon la revendication 4, caractérisée en ce que le carbonate de calcium a un diamètre particulaire moyen inférieur à 0,1 $\mu$m.

**6.** Dispersion aqueuse de silicone selon l'une quelconque des revendications précédentes, caractérisée en ce qu'elle comporte :
(A) : 100 parties de l'émulsion du type huile dans eau d'un $\alpha,\omega$-(dihydroxy)polydiorganosiloxane de viscosité à 25 °C comprise entre 50 000 et 1 500 000 mPa.s et est stabilisée par un agent tensio-actif choisi parmi un sel de métal alcalin d'un acide hydrocarboné aromatique sulfonique et les alkylphénols polyoxyéthylénés.
(B) : 2 à 20 parties de résine silicone hydroxylée,
(C) : 50 à 200 parties d'une charge minérale,
(D) : 0,05 à 2 parties d'un dicarboxylate de diorganoétain, ladite émulsion ayant une teneur en extraits secs d'au moins 60 %.

**7.** Dispersion aqueuse de silicone selon l'une quelconque des revendications précédentes, caractérisée en ce qu'elle comporte en outre pour 100 parties d'une émulsion (A), un additif silicié choisi parmi le silicate de soude (0,3 à 30 parties), et une charge siliceuse renforçante ou semi renforçante (1 à 150 parties), sous réserve que pour 100 parties de (A), la somme des parties de (C) + (E) soit inférieure à 300 parties.

**8.** Dispersion aqueuze selon l'une quelconque des revendications précédentes, caractérisée en ce qu'elle comporte en outre de 0,01 à 20 parties d'un agent d'adhérence (F) choisi parmi les organotrialcoxysilanes, les silicates d'alkyle et les polysilicates d'alkyle.

## Claims

**1.** Aqueous silicone dispersion crosslinking to an elastomer by elimination of water in ambient conditions, comprising, by weight:
(A) - 100 parts by weight of an emulsion of the oil-in-water type of an $\alpha,\omega$-(dihydroxy)polysiloxane stabilised with at least one surface-active agent chosen from anionic and nonionic surface-active agents and mixtures thereof,
(B) - 1 to 100 parts by weight of a hydroxylated silicone resin,
(C) - 0 to 250 parts by weight of a nonsiliceous inorganic filler,
(D) - 0.01 to 3 parts by weight of a metal cure catalyst compound, the said dispersion having a solids content of at least 40 % and being characterised in that the said hydroxylated silicone resin (B) is soluble to at least 70 % by weight in toluene and contains, per molecule, at least two different units chosen from those of formulae $R_3SiO_{0.5}$, $R_2SiO$, $RSiO_{1.5}$ and $SiO_2$, the radicals R, which are identical or different, being chosen from vinyl, phenyl and 3,3,3-trifluoropropyl radicals and linear or branched alkyl radicals containing from 1 to 6 carbon atoms inclusive, the said resin having a hydroxyl group weight content of between 0.1 and 10 %, and excluding the presence of a siliconate corresponding to the formula

$R'-Si(O^{-}M^{+})_m(OH)_{3-m}$

and/or its condensation products formed by removal of water, in which formula

- R' denotes identical or different hydrocarbon radicals containing 1 to 18 carbon atoms and capable of optionally being halogen atoms, amino radicals, ether radicals, ester radicals, epoxy radicals, mercapto radicals, cyano radicals or poly(glycol) radicals, the latter consisting of oxyethylene and/or oxypropylene units,
- m denotes a whole or fractional number between 0.1 and 3, and
- M denotes an alkali metal cation, an ammonium radical or a phosphonium radical.

**2.** Aqueous dispersion according to Claim 1, characterised in that the metal compound (D) is an organotin salt (D) which is in the form of an aqueous emulsion.

**3.** Aqueous silicone dispersion according to either of Claims 1 and 2, characterised in that the emulsion (A) has a solids content of at least 45 % by weight.

**4.** Aqueous silicone dispersion according to any one of the preceding claims, characterised in that it comprises from 5 to 200 parts by weight of filler (C) chosen from hydrated alumina, alumina, calcium carbonate, expanded vermiculite, unexpanded vermiculite, carbon black, zinc oxide, titanium dioxide, mica, talc, iron oxide, barium sulphate and slaked lime.

**5.** Aqueous silicone dispersion according to Claim 4, characterised in that the calcium carbonate has a mean particle diameter of less than 0.1 $\mu$m.

**6.** Aqueous silicone dispersion according to any one of the preceding claims, characterised in that it comprises:

(A) : 100 parts of the emulsion of the oil-in-water type of an $\alpha,\omega$-(dihydroxy)polydiorganosiloxane with a viscosity at 25 °C of between 50,000 and 1,500,000 mPa s and is stabilized with a surface-active agent chosen from an alkali metal salt of an aromatic hydrocarbon sulphonic acid and polyoxyethylenated alkylphenols.

(B) : 2 to 20 parts of hydroxylated silicone resin,

(C) : 50 to 200 parts of an inorganic filler,

(D) : 0.05 to 2 parts of a diorganotin dicarboxylate,

the said emulsion having a solids content of at least 60 %.

**7.** Aqueous silicone dispersion according to any one of the preceding claims, characterised in that it additionally comprises, per 100 parts of an emulsion (A), a siliceous additive chosen from sodium silicate (0.3 to 30 parts), and a reinforcing or semireinforcing siliceous filler (1 to 150 parts), provided that the sum of the parts of (C) + (E) is less than 300 parts per 100 parts of (A).

**8.** Aqueous dispersion according to any one of the preceding claims, characterised in that it additionally comprises from 0.01 to 20 parts by weight of an adhesion promoter (F) chosen from organotrialkoxysilanes, alkyl silicates and alkyl polysilicates.

## Patentansprüche

**1.** Wäßrige Silikonharz-Dispersion, vernetzbar unter Umgebungsbedingungen durch Wasserabspaltung zu einem Elastomer, enthaltend:

(A) - 100 Gewichtsteile einer Öl-in-Wasser-Emulsion eines $\alpha$, $\omega$-(Dihydroxy)-polysiloxans, stabilisiert durch mindestens ein grenzflächenaktives Mittel, ausgewählt unter den anionischen oder nichtionischen grenzflächenaktiven Mitteln und ihren Mischungen,

(B) - 1 bis 100 Gewichtsteile eines hvdroxylierten Silikonharzes,

(C) - 0 bis 250 Gewichtsteile eines mineralischen, nicht-siliciumhaltigen Füllstoffes,

(D) - 0,01 bis 3 Gewichtsteile einer katalytischen metallischen Härter-Verbindung,

wobei die genannte Dispersion eine Trockenmasse von mindestens 40 % besitzt, dadurch gekennzeichnet, daß das genannte hydroxylierte Silikonharz (B) zu mindestens 70 Gew.-% in Toluol löslich ist und pro Molekül mindestens zwei unterschiedliche Einheiten aufweist, ausgewählt unter denen der Formeln $R_3SiO_{0,5}$, $R_2SiO$, $RSiO_{1,5}$ und $SiO_2$, wobei die Reste R, gleich oder verschieden, ausgewählt

werden unter den Resten Vinyl, Phenyl, 3,3,3-Trifluor, Propyl und den linearen oder verzweigten Alkylresten mit 1 bis 6 Kohlenstoffatomen, und das genannte Harz einen Gewichtsanteil an Hydroxylgruppen zwischen 0,1 und 10 % aufweist,
ausgeschlossen die Anwesenheit eines Silikonates der Formel

$R'-Si(O^{-}M^{+})_m(OH)_{3-m}$

und/oder seiner durch Wasserabspaltung entstandenen Kondensationsprodukte, wobei in der obigen Formel
$R^1$ gleiche oder verschiedene Kohlenwasserstoffreste mit 1 bis 18 Kohlenstoffatomen darstellt, die gegebenenfalls Halogenatome, Aminoreste, Etherreste, Esterreste, Epoxireste, Mercaptoreste, Cyanoreste oder (Poly)glycolreste tragen, wobei diese letzteren aus Oxyethylen- und/oder Oxypropylen-Einheiten bestehen,
m eine ganze oder gebrochene Zahl zwischen 0,1 und 3 bezeichnet, und
M ein Metall-Kation, ein Ammoniumrest oder ein Phosphoniumrest ist.

**2.** Wäßrige Silikonharz-Dispersion nach Anspruch 1, dadurch gekennzeichnet, daß die Metallverbindung (D) ein Organo-Zinnsalz (D) ist, das in Form einer wäßrigen Emulsion vorliegt.

**3.** Wäßrige Silikonharz-Dispersion nach einem der Ansprüche 1 bis 2, dadurch gekennzeichnet, daß die Emulsion (A) eine Trockenmasse von mindestens 45 Gew.-% aufweist.

**4.** Wäßrige Silikonharz-Dispersion nach irgendeinem der vorstehenden Ansprüche, dadurch gekennzeichnet, daß sie 5 bis 200 Gewichtsteile des Füllstoffes (C) enthält, ausgewählt unter hvdratisierter Tonerde, Tonerde, Calciumcarbonat, verschäumtem Vermiculit, nicht-verschäumtem Vermiculit, Ruß, Zinkoxid, Titandioxid, Glimmer, Talk, Eisenoxid, Bariumsulfat und gelöschtem Kalk.

**5.** Wäßrige Silikonharz-Dispersion nach Anspruch 4, dadurch gekennzeichnet, daß das Calciumcarbonat einen mittleren Teilchendurchmesser von unterhalb 0,1 $\mu$m aufweist.

**6.** Wäßrige Silikonharz-Dispersion nach irgendeinem der vorstehenden Ansprüche, dadurch gekennzeichnet, daß sie umfaßt:
(A) : 100 Teile Öl-in-Wasser-Emulsion eines $\alpha$, $\omega$-(Dihydroxy)-polydiorganosiloxans mit einer Viskosität bei 25 °C zwischen 50.000 und 1.500.000 mPa•s, und stabilisiert durch ein grenzflächenaktives Mittel, ausgewählt unter dem Salz eines Alkalimetalles von einer aromatischen Kohlenwasserstoff-Sulfonsäure und den Polyoxyethylen-Alkylphenolen.
(B) : 2 bis 20 Teilen hydroxyliertes Silikonharz,
(C) : 50 bis 200 Teile mineralischen Füllstoff,
(D) : 0,05 bis 2 Teile eines Diorganozinn-dicarboxylates,
wobei die genannte Emulsion einen Trockenmassen-Anteil von mindestens 60 % aufweist.

**7.** Wäßrige Silikonharz-Dispersion nach irgendeinem der vorstehenden Ansprüche, dadurch gekennzeichnet, daß sie außerdem pro 100 Teile der Emulsion (A) einen siliciumhaltigen Zusatz umfaßt, ausgewählt unter Natriumsilicat (0,3 bis 30 Teile) und einem verstärkenden oder halb-verstärkendem, siliciumhaltigen Füllstoff (1 bis 150 Teile), unter dem Vorbehalt, daß pro 100 Teile (A) die Summe der Teile von (C) + (E) unterhalb von 300 Teilen liegt.

**8.** Wäßrige Silikonharz-Dispersion nach irgendeinem der vorstehenden Ansprüche, dadurch gekennzeichnet, daß sie außerdem 0,01 bis 20 Teile eines Adhäsionsmittels (F) umfaßt, ausgewählt unter den Organotrialkoxysilanen, den Alkylsilikaten und den Alkylpolysilikaten.